# EUROPEAN PATENT APPLICATION

(11) **EP 0 679 329 A1**
(43) Date of publication of application: **02.11.1995**
(21) Application number: 95201012.2
(22) Date of filing: 20.04.1995
(51) Int. Cl.: A01F 25/20, A01K 5/00

(54) **A mixing device and a method for mixing fodder**

(30) Priority: 28.04.1994 NL 9400683
(71) Applicant: Trioliet Mullos B.V., NL-7581 HE Losser (NL)
(72) Inventor: van der Plas, Nicolaas, NL-7576 WB Oldenzaal (NL)
(74) Representative: Louet Feisser, Arnold

(57) **Abstract**

A device for mixing fodder or the like material provided with a mixing chamber (3) in which mixing members (10) are moved in an endless path. The device is provided with a filling opening (13) for introducing the fodder into the mixing chamber (3), whereby the mixing members (10) can move near the filling opening (13). The device is furthermore provided with means (15) which prevent fodder which is being carried along from the filling opening (13) by a mixing member (10) from getting wedged between the mixing member (10) and the wall (14) of the mixing chamber (3), thus blocking the movement of the mixing members (10) or damaging the mixing members (10). Said means (15) may consist of projections which extend inwards from the wall (14) of the mixing chamber (3) up to the path of the mixing members (10).

## Description

The invention relates to a device for mixing fodder or the like material provided with a mixing chamber in which mixing members are moved in an endless path, said device being provided with a filling opening for introducing the fodder into said mixing chamber, whereby said mixing members can move near said filling opening. A device of this type is known from EP-A-0 506 158.

Such a device may be provided with mixing members in the form of metal bars, which move in transverse direction. Each end of a bar is thereby connected to an endless chain, which is moved in a predetermined path. The two endless chains follow a path such that the mixing members in the form of bars provided between said chains move near the wall of the mixing chamber. The mixing members thereby follow a path over the bottom of the mixing chamber, then move upwards along a wall part of the mixing chamber and subsequently return along the upper side of the mixing chamber and another wall part to the bottom of the mixing chamber. During this movement of the mixing members the fodder or other material present inside the mixing chamber is loosened and moved in such a manner that a homogeneous distribution of the material is obtained.

The aforesaid publication EP-A-0 506 158 describes a similar mixing device, which is mounted on a waggon drawn by a tractor. This device is provided with means for cutting off silage from a stock, after which the cut-off silage is introduced into the mixing chamber by moving said cut-off silage upwards along the outer wall of the mixing chamber until it reaches an opening where it can fall into the mixing chamber.

Although the mixing members of a device of this type substantially move near the wall of the mixing chamber and not through the central part of the mixing chamber, where a high load on the mixing members is to be expected, it still happens that overloading of the mixing members leads to damage.

The object of the invention is to provide a device of the aforesaid kind, wherein damage resulting from overloading of the mixing members is avoided.

In order to accomplish this objective the device is according to the invention provided with means which prevent fodder which is being carried along from the filling opening by a mixing member from getting wedged between said mixing member and the wall of the mixing chamber, thus blocking the movement of the mixing members. Upon investigating the problem it has namely become apparent that the overloading of the mixing members in particular occurs after the mixing members have passed the filling opening, whilst material is being introduced into the mixing chamber through the filling opening. It has appeared that material, especially when said material comprises longer fibres, is carried along from the filling opening by a mixing member during filling and lands between the mixing member and the wall, at the place where the mixing member is moving towards the walls.

Although the mixing members are very well able to withstand the load being exerted during the mixing of the fodder, it has become apparent that overloading of the mixing members may be caused by material which is introduced into the mixing chamber trough the filling opening and does not land on the bottom of said mixing chamber, but sticks to a mixing member just passing.

According to the invention means may be provided to remove from the mixing members any fodder which is being carried along from the filling opening by said mixing members. The wall of the mixing chamber may thereby be provided with projections near the filling opening and downstream thereof, seen in the direction of movement of the mixing members, which projections are capable of removing from the mixing members fodder being carried along by said mixing members.

According to one aspect of the invention said projections may be provided in several rows transversely to the direction of movement of the mixing members, and said projections may be provided in staggered relationship in several rows, seen in the direction of movement of the mixing members.

According to the invention the projections may furthermore be designed to have a length such that the projections which pass a mixing member first do not come as near the mixing member as do the projections which subsequently pass said mixing member. Furthermore the projections may be designed such that they can swing aside under pressure, they may spring or be spring-mounted or be made of a resilient material.

According to another aspect of the invention the projections may be provided with cutting edges, so that a cutting action may be performed on the fodder. According to the invention the position of the projections may furthermore be adjustable.

By using projections which extend inwards from the wall of the mixing chamber, up to a position near the place where the mixing members pass, it is possible to remove from the mixing members in an effective and reliable manner any fodder and other material which is being carried along by said mixing members.

According to another aspect of the invention a reversing mechanism may be provided, which is capable of reversing the direction of movement of the mixing members when said members are overloaded. Furthermore a slipping clutch or shearing coupling may be incorporated in the drive gear of the mixing members in order to prevent damage.

According to another aspect of the invention damage to the mixing members caused by fodder being carried along after passing the filling opening and landing between the mixing members and the wall may be provided by securing the mixing members to the endless chains in such a manner that said mixing members can deflect from their path. The mixing members may thereby be connected to the endless chains by means of a lever, whereby the mixing members may be retained in their position by means of a shearing pin, if desired.

According to another aspect of the invention the relative positions of the wall of the mixing chamber and the path of the mixing members may be such that after a mixing member has passed the filling opening the distance between the wall and said mixing member increases along with the movement of said mixing member. In this way the fodder being carried along from the filling opening by the mixing members cannot become wedged between the mixing members and the wall of the mixing chamber. According to the invention it is thereby possible to direct the chains from the filling opening to a guide wheel, which rotates in a direction opposite to the circular path of the chains, which guide wheels (chain wheels) may be positioned near the bottom of the mixing chamber, after which the chains are directed to next guide wheels positioned near the wall and near the bottom, said guide wheels guiding the chains to the bottom of the mixing chamber. Upon such a zigzag movement of the guide chain the second guide wheel, which is in contact with the chain over a large angle (for example 180°), may be used to tension the chain, since a slight radial movement of the guide wheel is sufficient to accomplish said tensioning.

The invention furthermore relates to a method for mixing fodder or the like material, wherein the fodder is mixed in a mixing chamber by mixing members which move in an endless path through said mixing chamber and wherein the fodder is introduced into said mixing chamber through a filling opening near the path of said mixing members, whereby according to the invention fodder which lands between the mixing members and the wall of the mixing chamber during filling is removed or whereby the mixing members are moved away from the wall after passing said filling opening.

Further aspects of the invention are mentioned and/or explained in the following description of the Figures and in the claims.

In order to more fully explain the invention a few embodiments of a device for mixing fodder will be explained hereafter with reference to the drawing, in which:
Figure 1 is a perspective view of an embodiment of the device;
Figure 2 is a cross-sectional view of a first embodiment;
Figure 3 is a cross-sectional view of a second embodiment; and
Figure 4 shows a detail as indicated in Figure 1.

The embodiments are only diagrammatically illustrated in the Figures, wherein some parts have been left out and other parts are only roughly indicated.

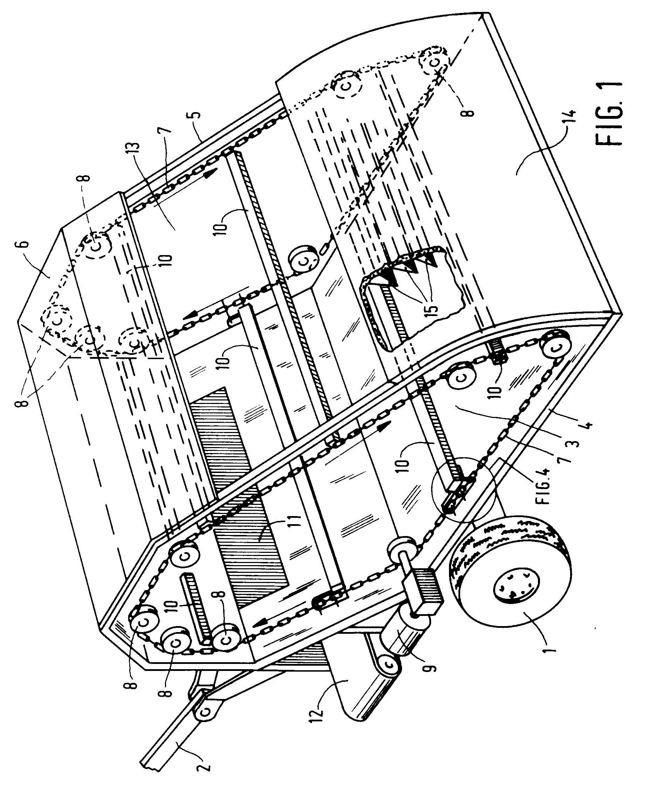

The device shown in Figure 1 is provided with wheels 1 and may be hitched to a tractor by coupling means 2. The device substantially consists of a mixing chamber 3, which is provided with a bottom 4, two side plates 5, whereby the front side plate has been left out in Figure 1 to provide an inside view of the device, and further walls 6, which enclose the mixing chamber. Two endless chains 7 are present inside the mixing chamber, which chains are guided into a path through the mixing chamber by guide wheels 8 (chain wheels). The chains 7 are driven by a motor 9, and the two chains are interconnected in such a manner that they move at the same speed. Motor 9 may for example be a hydraulic motor. Between the chains 7 mixing members 10 are provided, which consist of a metal bar which is with its ends connected to the chains 7. The fodder or other material present inside the mixing chamber is loosened and mixed by moving the mixing members 10 through the mixing chamber.

The fodder loosened and mixed in the mixing chamber may be discharged from the mixing chamber via discharge opening 11, which may be provided with a shut-off plate (not shown) so as to be opened and closed. The fodder which is removed from the mixing chamber via discharge opening 11 lands on conveyor belt 12, which may be driven in both directions, so that the fodder can be delivered to the animal feeding place from the left-hand side or from the right-hand side of the device, according to which is desired.

Filling opening 13 is provided to depositing the fodder or other material, for example silage material, into the mixing chamber. The tractor with the device can drive to a position near ensilaged fodder for filling the mixing chamber, whereupon cut-off or sawn-off pieces of fodder are moved upwards along the cylindrical wall part 14 and subsequently fall through the filling opening 13. The device may be provided with special means which are not illustrated in the Figures, but which are for example described in EP-A-0 506 158, in order to introduce the fodder into the mixing chamber in this manner. The pieces of silage material which are introduced into the mixing chamber in this manner are loosened in the mixing chamber and possibly mixed with other feed components.

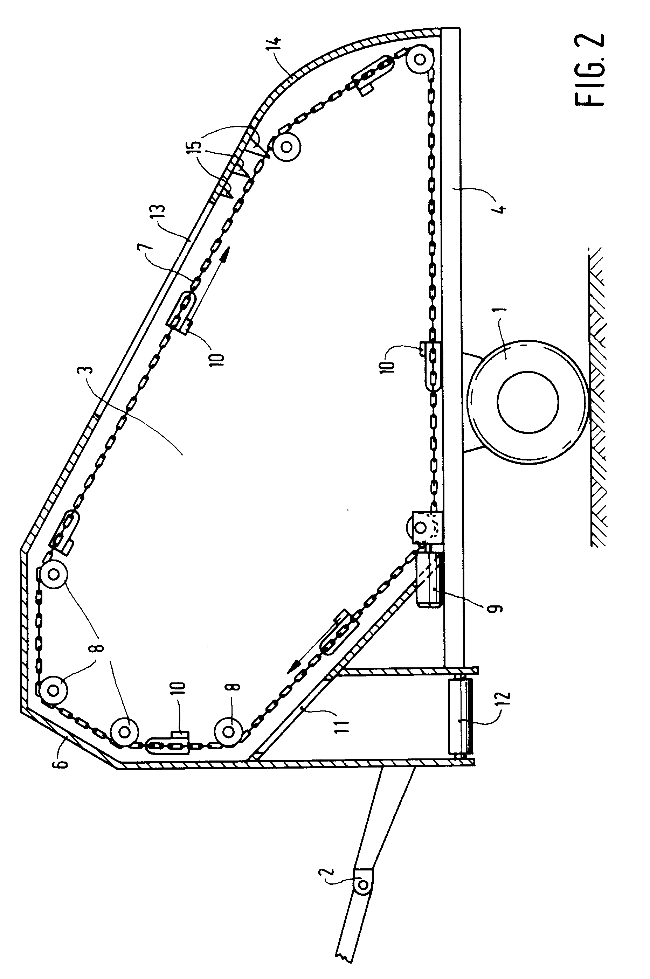

It has become apparent that while the mixing chamber is being filled parts of the material may land on the mixing members in such a manner that the material is carried along by the mixing members. Especially when the material contains long fibres the material may stick to the mixing members in this manner. In order to prevent such material from landing between a mixing members and the wall in such a manner that the mixing members threatens to get stuck as a result, projections 15 are provided, which are capable of removing material from the mixing member when said mixing member moves along said projections 15. Figure 2 diagrammatically shows three rows of projections 15, whereby the row of projections 15 which first passes the mixing member 10 projects less far inwards from the wall of the mixing chamber than does the row of projections 15 which the mixing member subsequently passes. In practice it has become apparent that such projections effectively remove any material being carried along by the mixing members from said mixing members.

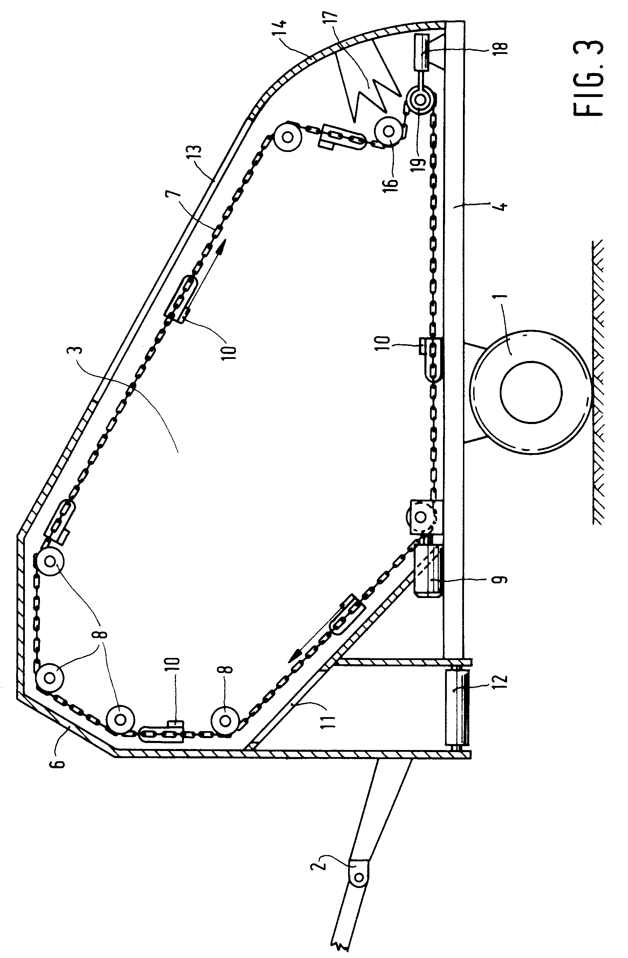

Figures 2 and 3 show the bottom 4 of the mixing chamber in elevational view, whilst the other walls 6, 14 are hatched.

The embodiment of the mixing device according to Figure 3 comprises an additional guide wheel 16 (chain wheel), which guides the chain 7 in such a manner that after passing the filling opening 13 the mixing members 10 move along a path which leads away from the wall 6 of the device, in particular from the cylindrical wall part 14. Since the distance between the mixing member and the wall increases after passing the filling opening, jamming of the mixing members as a result of material getting stuck between the wall and the mixing member is ruled out. Of course it will also be possible to achieve such a path of the mixing members by means other than an additional guide wheel 16, which guides the mixing members into an S-curve, as it were. The direction of rotation of the guide wheel 16 is thereby reversed with respect to the direction of rotation of the other guide wheels 8. The embodiment of Figure 3 furthermore comprises additional projections 17, which project from the wall 14 into the mixing chamber. These projections 17 may be used in combination with guide wheel 17 to further improve the operation of the device.

Figure 3 furthermore shows a device 18 with which the guide wheel 19 can be moved in order to tension chain 7.

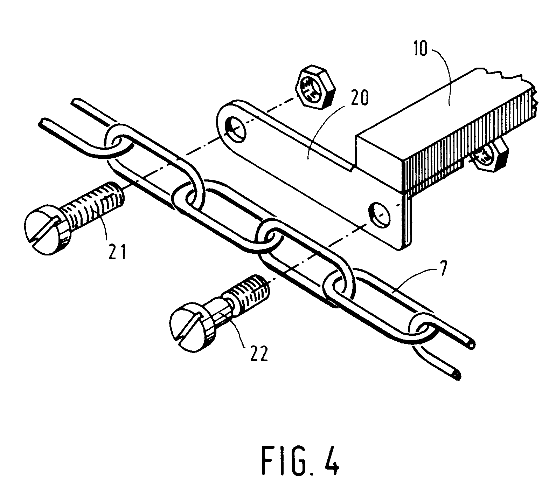

Figure 4 diagrammatically shows a construction for securing the mixing member 10 to the chain 7, and that in such a manner that the mixing member 10 can move from the path in which the chain 7 is being moved. To that end the mixing member 10 is secured to a connecting rod 20, with a pivoted connection to chain 7 at the one end and a shearing pin connection to chain 7 at the other end. Bolt 21 connects connecting rod 20 to chain 7 in such a manner, that connecting rod 20 can pivot freely with respect to chain 7, and that about the axis of bolt 21. Shearing pin 22 connects the other end of connecting rod 20 to the chain 7 in such a manner that the shearing pin 22 will break when mixing member 10 is subjected to a high load, which forces the mixing member 10 from its path of movement. At that moment the mixing member 10 will not be damaged as a result of being overloaded, but the mixing member will move from its path of movement, whereby the device keeps functioning. The shearing pin 22 may be replaced by a new one after shearing.

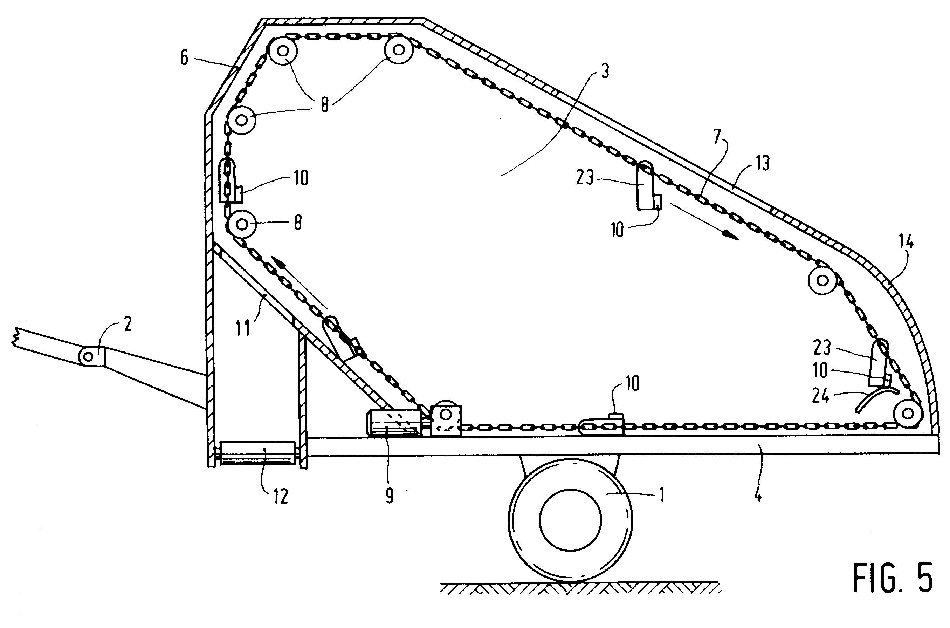

Figure 5 shows an embodiment wherein the mixing members 10 are secured to the chain 7 by pivoting arms 23. In fact this is the same construction as shown in Figure 4, leaving out the shearing pin 22, however. The pivoting arms 23 enable the mixing member 10 to move from its normal path of movement. In order to prevent the mixing member 10 from getting into an incorrect position when approaching the bottom 4 of the device, a guide plate 24 is provided, which moves the mixing member to a "dragging" position. The guide plate 24 extends from one or two side walls of the device to a position just within the path in which the mixing members 10 pass.

The above-described embodiments of the invention are to be considered as examples only, because many variants and embodiments are possible, which all fall within the scope of the invention.

## Claims

1. A device for mixing fodder or the like material provided with a mixing chamber in which mixing members are moved in an endless path, said device being provided with a filling opening for introducing the fodder into said mixing chamber, whereby said mixing members can move near said filling opening, characterized in that said device is provided with means which prevent fodder which is being carried along from the filling opening by a mixing member from getting wedged between said mixing member and the wall of the mixing chamber, thus blocking the movement of the mixing members.

2. A device according to claim 1, characterized in that said mixing members consist of transversely movable bars, said bars near their ends being secured to endless chains.

3. A device according to claim 1 or 2, characterized in that means are provided for removing from the mixing members any fodder which is being carried along from the filling opening by said mixing members.

4. A device according to any one of the preceding claims, characterized in that the wall of the mixing chamber is provided with projections near the filling opening and downstream thereof, seen in the direction of movement of the mixing members, which projections are capable of removing from the mixing members fodder being carried along by said mixing members.

5. A device according to claim 4, characterized in that said projections are provided in several rows transversely to the direction of movement of the mixing members, and said projections may be provided in staggered relationship in several rows, seen in the direction of movement of the mixing members.

6. A device according to claim 4 or 5, characterized in that projections which are located further away from said filling opening come nearer the mixing members than do the projections which are located closer to said filling opening.

7. A device according to any one of the claims 4 - 6, characterized in that said projections can swing aside under pressure, be springing or spring-mounted or be made of a resilient material.

8. A device according to any one of the claims 4 - 7, characterized in that said projections are provided with cutting edges.

9. A device according to any one of the claims 4 - 8, characterized in that the position of the projections is adjustable.

10. A device according to any one of the preceding claims, characterized in that said means comprise a reversing mechanism for reversing the direction of movement of the mixing members.

11. A device according to any one of the preceding claims, characterized in that said means comprise a slipping clutch or a shearing coupling incorporated in the drive gear of the mixing members.

12. A device according to any one of the preceding claims, characterized in that said mixing members are secured to said endless chains by fastening means, which allow said mixing members to deflect from said endless path.

13. A device according to claim 12, characterized in that said mixing members are connected to said endless chains by means of pivoting arms.

14. A device according to claim 13, characterized in that a guide is provided near the place where said mixing members approach the bottom of the device, against which guide said mixing members can be supported in order to take up a dragging position.

15. A device according to claim 13, characterized in that said arms are retained in a fixed position by means of a shearing pin or the like.

16. A device according to any one of the preceding claims, characterized in that downstream of said filling opening the distance between said mixing members and the wall of said mixing chamber increases.

17. A device according to claim 16, characterized in that downstream of said filling opening the endless chain moving said mixing members is passed over two guide wheels (chain wheels) rotating in opposite directions, so that said chain makes a zigzag ("S") movement.

18. A device according to claim 17, characterized in that the second of said two guide wheels is radially movable with a view to tensioning said chain.

19. A method for mixing fodder or the like material, wherein the fodder is mixed in a mixing chamber by mixing members which move in an endless path through said mixing chamber and wherein the fodder is introduced into said mixing chamber through a filling opening near the path of said mixing members, characterized in that fodder which lands between said mixing members and the wall of said mixing chamber during filling is removed.

20. A method according to claim 19, characterized in that said removing takes place by means of stationary projections on the wall of said mixing chamber.

21. A method according to claim 19 or 20, characterized in that after passing said filling opening said mixing members are guided into a path in which the distance between said mixing members and said wall is increased.

22. A method according to any one of the claims 19 - 21, characterized in that the direction of movement of said mixing members is reversed when a mixing member is blocked.

23. A method according to any one of the claims 19 - 22, characterized in that means according to any one of claims 1 - 18 are used.
